# EUROPEAN PATENT APPLICATION

(11) **EP 4 092 945 A1**
(43) Date of publication of application: **23.11.2022**
(21) Application number: 21740839.2
(22) Date of filing: 07.02.2021
(51) Int. Cl.: H04L 5/00, H04B 17/382

(54) **SRS RESOURCE CONFIGURATION METHOD AND SYSTEM, DEVICE, MEDIUM AND BASE STATION**

(30) Priority: 17.01.2020 CN 202010055439
(71) Applicant: Spreadtrum Communications (Shanghai) Co., Ltd., Shanghai 201203 (CN)
(72) Inventor: ZHANG, Meng, Shanghai 201203 (CN)
(74) Representative: Mewburn Ellis LLP
(86) International application number: PCT/CN2021/075846
(87) International publication number: WO 2021/143938

(57) **Abstract**

A method and system for configuring a sounding reference signal (SRS) resource, a device, a medium, and a base station are provided. The method includes: obtaining transmit-receive port information of a user equipment (UE) based on a UE capability report; generating corresponding target configuration information based on the transmit-receive port information; and transmitting the target configuration information to the UE for configuration. In the disclosure, the base station configures SRS resources based on different antenna combinations corresponding to the user equipment after antenna switching, such as 1T6R, 2T6R, 4T6R, 1T8R, 2T8R, and 4T8R, etc., to enlarge the transmit-receive channel matrix and effectively improve the flexibility of the scheduling. In addition, the base station configures appropriate resources for the UE, further improving the flexibility of resource configuration and the utilization rate of resources.

## Description

### CROSS-REFERENCE TO RELATED APPLICATION(S)

This application claims priority to Chinese Patent Application No. 202010055439.X, filed on January 17, 2020, the entire disclosure of which is hereby incorporated by reference.

### TECHNICAL FIELD

The disclosure relates to the technical field of communication, and in particular to a method and system for configuring a sounding reference signal (SRS) resource, a device, a medium, and a base station.

### BACKGROUND

In a new radio (NR) system, a base station may configure an uplink resource for transmitting a sounding reference signal (SRS) for a user equipment (UE), and the UE transmits the SRS on the uplink resource. Then, the base station can measure an uplink channel based on the SRS (for example, the base station can estimate channel state information between a transmit antenna of a terminal and a receive antenna of the base station by receiving the SRS transmitted by the UE), and calculate relevant parameters of the uplink channel. The relevant parameters may include channel quality information (CQI), reference signal reception power (RSRP), channel state information (CSI), and the like.

However, due to low configuration flexibility of the existing resource configuration method, flexibility of scheduling of the base station fails to meet actual use requirements.

### SUMMARY

The technical problem to be solved of the disclosure is that: flexibility of scheduling of a base station fails to meet actual use requirements due to low configuration flexibility of the resource configuration method in the prior art. The disclosure aims to provide a method and system for configuring a sounding reference signal (SRS) resource, a device, a medium, and a base station.

The disclosure provides a method for configuring an SRS resource. The method is applicable to a base station. Specifically, when the SRS set configuration configured by the base station for the terminal (i.e., user equipment) through higher layer signaling is for "antenna switching", the base station configures the SRS resource for the terminal based on the antenna port capability reported by the UE.

The method includes: obtaining transmit-receive port information of a user equipment (UE) based on a UE capability report (i.e., a report of a UE capability), where the transmit-receive port information includes information of M transmit antenna ports and N receive antenna ports corresponding to the UE, and M=1, 2, or 4 and N=6 or 8; generating corresponding target configuration information based on the transmit-receive port information, where the target configuration information includes a number of SRS resource sets and a number of SRS resources contained in each SRS resource set; and transmitting the target configuration information to the UE for configuration.

Preferably, generating the corresponding target configuration information based on the transmit-receive port information includes: configuring the transmit-receive port information to correspond a first number of SRS resource sets and each SRS resource set to contain a second number of SRS resources.

Preferably, in response to the transmit-receive port information corresponding to M=1 and N=6, the target configuration information includes three SRS resource sets and each SRS resource set contains two SRS resources.

Alternatively, in response to the transmit-receive port information corresponding to M=1 and N=6, the target configuration information includes two SRS resource sets, one SRS resource set contains two SRS resources, and the other SRS resource set contains four SRS resources.

Alternatively, in response to the transmit-receive port information corresponding to M=1 and N=6, the target configuration information includes two SRS resource sets, one SRS resource set contains one SRS resource, and the other SRS resource set contains five SRS resources.

Alternatively, in response to the transmit-receive port information corresponding to M=1 and N=6, the target configuration information includes one SRS resource set and the SRS resource set contains six SRS resources.

Alternatively, in response to the transmit-receive port information corresponding to M=2 and N=6, the target configuration information includes two SRS resource sets, one SRS resource set contains one SRS resource, and the other SRS resource set contains two SRS resources.

Alternatively, in response to the transmit-receive port information corresponding to M=2 and N=6, the target configuration information includes one SRS resource set and the SRS resource set contains three SRS resources.

Alternatively, in response to the transmit-receive port information corresponding to M=4 and N=6, the target configuration information includes one SRS resource set and the SRS resource set contains two SRS resources.

Alternatively, in response to the transmit-receive port information corresponding to M=4 and N=6, the target configuration information includes two SRS resource sets and each SRS resource set contains one SRS resource.

Preferably, in response to the transmit-receive port information corresponding to M=1 and N=8, the target configuration information includes four SRS resource sets and each SRS resource set contains two SRS resources.

Alternatively, in response to the transmit-receive port information corresponding to M=1 and N=8, the target configuration information includes two SRS resource sets and each SRS resource set contains four SRS resources.

Alternatively, in response to the transmit-receive port information corresponding to M=1 and N=8, the target configuration information includes two SRS resource sets, one SRS resource set contains two SRS resources, and the other SRS resource set contains six SRS resources.

Alternatively, in response to the transmit-receive port information corresponding to M=1 and N=8, the target configuration information includes two SRS resource sets, one SRS resource set contains three SRS resources, and the other SRS resource set contains five SRS resources.

Alternatively, in response to the transmit-receive port information corresponding to M=2 and N=8, the target configuration information includes two SRS resource sets, one SRS resource set contains two SRS resources, and the other SRS resource set contains two SRS resources.

Alternatively, in response to the transmit-receive port information corresponding to M=2 and N=8, the target configuration information includes two SRS resource sets, one SRS resource set contains one SRS resource, and the other SRS resource set contains three SRS resources.

Alternatively, in response to the transmit-receive port information corresponding to M=2 and N=8, the target configuration information includes one SRS resource set, and the SRS resource set contains four SRS resources.

Alternatively, in response to the transmit-receive port information corresponding to M=4 and N=8, the target configuration information includes two SRS resource sets, one SRS resource set contains two SRS resources, and the other SRS resource set contains two SRS resources.

Alternatively, in response to the transmit-receive port information corresponding to M=4 and N=8, the target configuration information includes one SRS resource set, and the SRS resource set contains two SRS resources.

Preferably, the method further incudes: configuring the first number of SRS resource sets to occupy a third number of slot units when the target configuration information includes the first number of SRS resource sets.

Preferably, in response to the transmit-receive port information corresponding to M=1 and N=6, the target configuration information includes three SRS resource sets, and each SRS resource set contains two SRS resources, the three SRS resource sets occupy three different slot units.

Alternatively, in response to the transmit-receive port information corresponding to M=1 and N=6, the target configuration information includes two SRS resource sets, one SRS resource set contains two SRS resources, and the other SRS resource set contains four SRS resources, the two SRS resource sets occupy two different slot units.

Alternatively, in response to the transmit-receive port information corresponding to M=1 and N=6, the target configuration information includes two SRS resource sets, one SRS resource set contains one SRS resource, and the other SRS resource set contains five SRS resources, the two SRS resource sets occupy two different slot units.

Alternatively, in response to the transmit-receive port information corresponding to M=1 and N=6, the target configuration information includes one SRS resource set, and the SRS resource set contains six SRS resources, the SRS resource set occupies one slot unit.

Alternatively, in response to the transmit-receive port information corresponding to M=2 and N=6, the target configuration information includes two SRS resource sets, one SRS resource set contains one SRS resource, and the other SRS resource set contains two SRS resources, the two SRS resource sets occupy two different slot units.

Alternatively, in response to the transmit-receive port information corresponding to M=2 and N=6, the target configuration information includes one SRS resource set, and the SRS resource set contains three SRS resources, the SRS resource set occupies one slot unit.

Alternatively, in response to the transmit-receive port information corresponding to M=4 and N=6, the target configuration information includes one SRS resource set, and the SRS resource set contains two SRS resources, the SRS resource set occupies one slot unit.

Alternatively, in response to the transmit-receive port information corresponding to M=4 and N=6, the target configuration information includes two SRS resource sets, and each SRS resource set contains one SRS resource, one SRS resource set occupies one slot unit or two slot units.

Preferably, in response to the transmit-receive port information corresponding to M=1 and N=8, the target configuration information includes four SRS resource sets, and each SRS resource set contains two SRS resources, the four SRS resource sets occupy four different slot units.

Alternatively, in response to the transmit-receive port information corresponding to M=1 and N=8, the target configuration information includes two SRS resource sets, and each SRS resource set contains four SRS resources, the two SRS resource sets occupy two different slot units.

Alternatively, in response to the transmit-receive port information corresponding to M=1 and N=8, the target configuration information includes two SRS resource sets, one SRS resource set contains two SRS resources, and the other SRS resource set contains six SRS resources, the two SRS resource sets occupy two different slot units.

Alternatively, in response to the transmit-receive port information corresponding to M=1 and N=8, the target configuration information includes two SRS resource sets, one SRS resource set contains three SRS resources, and the other SRS resource set contains five SRS resources, the two SRS resource sets occupy two different slot units.

Alternatively, in response to the transmit-receive port information corresponding to M=2 and N=8, the target configuration information includes two SRS resource sets, one SRS resource set contains two SRS resources, and the other SRS resource set contains two SRS resources, the two SRS resource sets occupy two different slot units.

Alternatively, in response to the transmit-receive port information corresponding to M=2 and N=8, the target configuration information includes two SRS resource sets, one SRS resource set contains one SRS resource, and the other SRS resource set contains three SRS resources, the two SRS resource sets occupy two different slot units.

Alternatively, in response to the transmit-receive port information corresponding to M=2 and N=8, the target configuration information includes one SRS resource set, and the SRS resource set contains four SRS resources, the SRS resource set occupies one slot unit.

Alternatively, in response to the transmit-receive port information corresponding to M=4 and N=8, the target configuration information includes two SRS resource sets, one SRS resource set contains two SRS resources, and the other SRS resource set contains two SRS resources, the two SRS resource sets occupy one slot unit or two slot units.

Alternatively, in response to the transmit-receive port information corresponding to M=4 and N=8, the target configuration information includes one SRS resource set, and the SRS resource set contains two SRS resources, the SRS resource set occupies one slot unit.

Preferably, the method further includes: configuring each SRS resource set to be periodic, aperiodic, or semi-persistent; or configuring each SRS resource in each SRS resource set to be periodic, aperiodic, or semi-persistent.

The disclosure further provides a system for configuring an SRS resource. The system includes: a port information obtaining module, a configuration information generating module, and a configuration information transmitting module which are all set in a base station.

The port information obtaining module is configured to obtain transmit-receive port information of a UE based on a UE capability report, where the transmit-receive port information includes information of M transmit antenna ports and N receive antenna ports corresponding to the UE, and M=1, 2, or 4 and N=6 or 8.

The configuration information generating module is configured to generate corresponding target configuration information based on the transmit-receive port information, where the target configuration information includes a number of SRS resource sets and a number of SRS resources contained in each SRS resource set.

The configuration information transmitting module is configured to transmit the target configuration information to the UE.

Preferably, the configuration information generating module is configured to configure the transmit-receive port information to correspond a first number of SRS resource sets and each SRS resource set to contain a second number of SRS resources.

Preferably, in response to the transmit-receive port information corresponding to M=1 and N=6, the target configuration information includes three SRS resource sets and each SRS resource set contains two SRS resources.

Alternatively, in response to the transmit-receive port information corresponding to M=1 and N=6, the target configuration information includes two SRS resource sets, one SRS resource set contains two SRS resources, and the other SRS resource set contains four SRS resources.

Alternatively, in response to the transmit-receive port information corresponding to M=1 and N=6, the target configuration information includes two SRS resource sets, one SRS resource set contains one SRS resource, and the other SRS resource set contains five SRS resources.

Alternatively, in response to the transmit-receive port information corresponding to M=1 and N=6, the target configuration information includes one SRS resource set and the SRS resource set contains six SRS resources.

Alternatively, in response to the transmit-receive port information corresponding to M=2 and N=6, the target configuration information includes two SRS resource sets, one SRS resource set contains one SRS resource, and the other SRS resource set contains two SRS resources.

Alternatively, in response to the transmit-receive port information corresponding to M=2 and N=6, the target configuration information includes one SRS resource set and the SRS resource set contains three SRS resources.

Alternatively, in response to the transmit-receive port information corresponding to M=4 and N=6, the target configuration information includes one SRS resource set and the SRS resource set contains two SRS resources.

Alternatively, in response to the transmit-receive port information corresponding to M=4 and N=6, the target configuration information includes two SRS resource sets and each SRS resource set contains one SRS resource.

Preferably, in response to the transmit-receive port information corresponding to M=1 and N=8, the target configuration information includes four SRS resource sets and each SRS resource set contains two SRS resources.

Alternatively, in response to the transmit-receive port information corresponding to M=1 and N=8, the target configuration information includes two SRS resource sets and each SRS resource set contains four SRS resources.

Alternatively, in response to the transmit-receive port information corresponding to M=1 and N=8, the target configuration information includes two SRS resource sets, one SRS resource set contains two SRS resources, and the other SRS resource set contains six SRS resources.

Alternatively, in response to the transmit-receive port information corresponding to M=1 and N=8, the target configuration information includes two SRS resource sets, one SRS resource set contains three SRS resources, and the other SRS resource set contains five SRS resources.

Alternatively, in response to the transmit-receive port information corresponding to M=2 and N=8, the target configuration information includes two SRS resource sets, one SRS resource set contains two SRS resources, and the other SRS resource set contains two SRS resources.

Alternatively, in response to the transmit-receive port information corresponding to M=2 and N=8, the target configuration information includes two SRS resource sets, one SRS resource set contains one SRS resource, and the other SRS resource set contains three SRS resources.

Alternatively, in response to the transmit-receive port information corresponding to M=2 and N=8, the target configuration information includes one SRS resource set, and the SRS resource set contains four SRS resources.

Alternatively, in response to the transmit-receive port information corresponding to M=4 and N=8, the target configuration information includes two SRS resource sets, one SRS resource set contains two SRS resources, and the other SRS resource set contains two SRS resources.

Alternatively, in response to the transmit-receive port information corresponding to M=4 and N=8, the target configuration information includes one SRS resource set, and the SRS resource set contains two SRS resources.

Preferably, the first number of SRS resource sets occupies a third number of slot units when the target configuration information includes the first number of SRS resource sets.

Preferably, in response to the transmit-receive port information corresponding to M=1 and N=6, the target configuration information includes three SRS resource sets, and each SRS resource set contains two SRS resources, the three SRS resource sets occupy three different slot units.

Alternatively, in response to the transmit-receive port information corresponding to M=1 and N=6, the target configuration information includes two SRS resource sets, one SRS resource set contains two SRS resources, and the other SRS resource set contains four SRS resources, the two SRS resource sets occupy two different slot units.

Alternatively, in response to the transmit-receive port information corresponding to M=1 and N=6, the target configuration information includes two SRS resource sets, one SRS resource set contains one SRS resource, and the other SRS resource set contains five SRS resources, the two SRS resource sets occupy two different slot units.

Alternatively, in response to the transmit-receive port information corresponding to M=1 and N=6, the target configuration information includes one SRS resource set, and the SRS resource set contains six SRS resources, the SRS resource set occupies one slot unit.

Alternatively, in response to the transmit-receive port information corresponding to M=2 and N=6, the target configuration information includes two SRS resource sets, one SRS resource set contains one SRS resource, and the other SRS resource set contains two SRS resources, the two SRS resource sets occupy two different slot units.

Alternatively, in response to the transmit-receive port information corresponding to M=2 and N=6, the target configuration information includes one SRS resource set, and the SRS resource set contains three SRS resources, the SRS resource set occupies one slot unit.

Alternatively, in response to the transmit-receive port information corresponding to M=4 and N=6, the target configuration information includes one SRS resource set, and the SRS resource set contains two SRS resources, the SRS resource set occupies one slot unit.

Alternatively, in response to the transmit-receive port information corresponding to M=4 and N=6, the target configuration information includes two SRS resource sets, and each SRS resource set contains one SRS resource, the two SRS resource sets occupy one slot unit.

Preferably, in response to the transmit-receive port information corresponding to M=1 and N=8, the target configuration information includes four SRS resource sets, and each SRS resource set contains two SRS resources, the four SRS resource sets occupy four different slot units.

Alternatively, in response to the transmit-receive port information corresponding to M=1 and N=8, the target configuration information includes two SRS resource sets, and each SRS resource set contains four SRS resources, the two SRS resource sets occupy two different slot units.

Alternatively, in response to the transmit-receive port information corresponding to M=1 and N=8, the target configuration information includes two SRS resource sets, one SRS resource set contains two SRS resources, and the other SRS resource set contains six SRS resources, the two SRS resource sets occupy two different slot units.

Alternatively, in response to the transmit-receive port information corresponding to M=1 and N=8, the target configuration information includes two SRS resource sets, one SRS resource set contains three SRS resources, and the other SRS resource set contains five SRS resources, the two SRS resource sets occupy two different slot units.

Alternatively, in response to the transmit-receive port information corresponding to M=2 and N=8, the target configuration information includes two SRS resource sets, one SRS resource set contains two SRS resources, and the other SRS resource set contains two SRS resources, the two SRS resource sets occupy two different slot units.

Alternatively, in response to the transmit-receive port information corresponding to M=2 and N=8, the target configuration information includes two SRS resource sets, one SRS resource set contains one SRS resource, and the other SRS resource set contains three SRS resources, the two SRS resource sets occupy two different slot units.

Alternatively, in response to the transmit-receive port information corresponding to M=2 and N=8, the target configuration information includes one SRS resource set, and the SRS resource set contains four SRS resources, the SRS resource set occupies one slot unit.

Alternatively, in response to the transmit-receive port information corresponding to M=4 and N=8, the target configuration information includes two SRS resource sets, one SRS resource set contains two SRS resources, and the other SRS resource set contains two SRS resources, the two SRS resource sets occupy one slot unit or two slot units.

Alternatively, in response to the transmit-receive port information corresponding to M=4 and N=8, the target configuration information includes one SRS resource set, and the SRS resource set contains two SRS resources, the SRS resource set occupies one slot unit.

Preferably, the configuration information generating module is configured to: configure each SRS resource set to be periodic, aperiodic, or semi-persistent; or configure each SRS resource in each SRS resource set to be periodic, aperiodic, or semi-persistent.

The disclosure further provides an electronic device. The electronic device includes a memory, a processor, and a computer program stored in the memory and executable on the processor. When executing the computer program, the processor implements the above method for configuring an SRS resource.

The disclosure further provides a computer-readable storage medium. The computer-readable storage medium stores a computer program thereon. When executed by a processor, the computer program implements operations of the above method for configuring an SRS resource.

The disclosure further provides a base station. The base station includes the above system for configuring an SRS resource.

The advantageous progressive effect of the disclosure is as follows.

In the disclosure, based on the UE capability report, the transmit-receive port information (corresponding to different antenna combinations, 6R/8R) of the UE is obtained, and then the corresponding target configuration information is generated based on the transmit-receive port information. That is, SRS resources are allocated for different antenna combinations, respectively achieving SRS resource configuration for 1T6R, 2T6R, 4T6R, 1T8R, 2T8R, and 4T8R, to enlarge the transmit-receive channel matrix and effectively improve the flexibility of the scheduling of the base station. In addition, the base station configures appropriate resources for the UE, further improving the flexibility of resource configuration and the utilization rate of resources.

### BRIEF DESCRIPTION OF THE DRAWINGS

FIG. 1 is a flow chart of a method for configuring a sounding reference signal (SRS) resource of embodiment 1 of the disclosure.
FIG. 2 is a schematic diagram of a user equipment (UE) capability report in case of 1T6R in a method for configuring an SRS resource of embodiment 2 of the disclosure.
FIG. 3 is a schematic diagram of a UE capability report in case of 2T6R in the method for configuring an SRS resource of embodiment 2 of the disclosure.
FIG. 4 is a schematic diagram of a UE capability report in case of 4T6R in the method for configuring an SRS resource of embodiment 2 of the disclosure.
FIG. 5 is a schematic diagram of a UE capability report in case of 1T8R in the method for configuring an SRS resource of embodiment 2 of the disclosure.
FIG. 6 is a first schematic diagram of a UE capability report in case of 2T8R in the method for configuring an SRS resource of embodiment 2 of the disclosure.
FIG. 7 is a second schematic diagram of a UE capability report in case of 2T8R in the method for configuring an SRS resource of embodiment 2 of the disclosure.
FIG. 8 is a first schematic diagram of a UE capability report in case of 4T8R in the method for configuring an SRS resource of embodiment 2 of the disclosure.
FIG. 9 is a second schematic diagram of a UE capability report in case of 4T8R in the method for configuring an SRS resource of embodiment 2 of the disclosure.
FIG. 10 is a schematic diagram of modules of a system for configuring an SRS resource of embodiment 3 of the disclosure.
FIG. 11 is a schematic structural diagram of a base station of embodiment 5 of the disclosure.
FIG. 12 is a schematic structural diagram of an electronic device that implements a method for configuring an SRS resource of embodiment 6 of the disclosure.

### DETAILED DESCRIPTION

The disclosure is further described below by way of embodiments, but is not limited to the scope of the described embodiments.

It should be noted that, a method for configuring a sounding reference signal (SRS) resource provided in the embodiment of the disclosure may be executed by a separate chip or chip module, or base station, or may be a chip or chip module integrated in the base station.

A system for configuring an SRS resource described in the embodiments of the disclosure may specifically be a separate chip or chip module, or a base station, or may be a chip or chip module integrated in the base station. The modules/units included in the system for configuring an SRS resource may be software modules/units or hardware modules/units, or may be partly software modules/units and partly hardware modules/units. For example, for each device or product applied to or integrated in a chip, each module/unit included therein may be implemented by hardware such as a circuit; alternatively, at least some modules/units may be implemented by a software program that runs on a processor integrated in the chip, and the remaining modules/units may be implemented by hardware such as a circuit. For each device and product applied to or integrated in the chip module, each module/unit included therein can be implemented by hardware such as a circuit, and different modules/units can be located in the same component (such as chip, circuit module, etc.) or in different components of the chip module; alternatively, at least some modules/units may be implemented by a software program that runs on a processor integrated in the chip module, and the remaining modules/units may be implemented by hardware such as a circuit. For each device and product applied to or integrated in the base station, each module/unit included therein may be implemented by hardware such as a circuit, and different modules/units may be located in the same component (such as chip, circuit module, etc.) or in different components of the terminal; alternatively, at least some modules/units may be implemented by a software program that runs on a processor integrated in the base station, and the remaining modules/units may be implemented by hardware such as a circuit.

### Embodiment 1

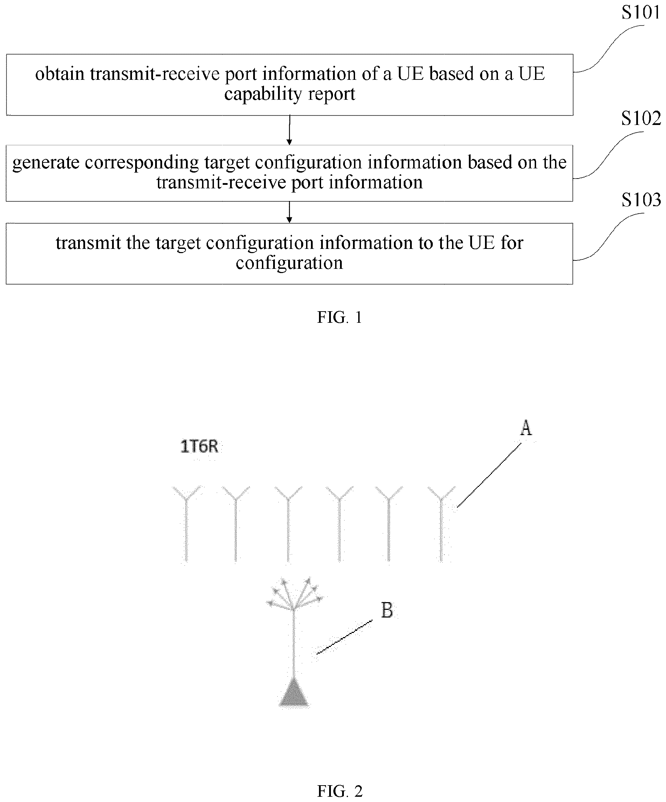

As illustrated in FIG. 1, the method for configuring an SRS resource of this embodiment includes the following.

S101, obtain transmit-receive port information of a user equipment (UE) based on a UE capability report.

The transmit-receive port information includes information of M transmit antenna ports and N receive antenna ports corresponding to the UE, where M=1, 2, or 4 and N=6 or 8.

In the case that N=6, transmit-receive port information (i.e., different antenna combinations) corresponding to antenna switching includes 1T6R, 2T6R, or 4T6R. In the case that N=8, antenna combinations corresponding to antenna switching include 1T8R, 2T8R, or 4T8R. "T" represents transmit antenna port and "R" represents receive antenna port.

Furthermore, N can take a value of n (n ≧ 9 and is an integer), and the corresponding SRS resource configuration can also be implemented based on the configuration method of the disclosure. The larger the value of n is, the higher the performance requirements of the UE are.

S102, generate corresponding target configuration information based on the transmit-receive port information.

Specifically, S102 includes the following.

S1021, configure the transmit-receive port information to correspond a first number of SRS resource sets and each SRS resource set to contain a second number of SRS resources, and the first number of SRS resource sets to occupy a third number of slot units.

It can be understood that, the first number of SRS resource sets occupying the third number of slot units can be predefined, rather than indicated explicitly through signaling.

The SRS resource set can be configured to be periodic, aperiodic, or semi-persistent.

Alternatively, each SRS resource in the SRS resource set can be configured to be periodic, aperiodic, or semi-persistent.

S103, transmit the target configuration information to UE for configuration.

Furthermore, optionally, SRS resources in the same SRS resource set may be transmitted on different symbols. The symbols may be orthogonal frequency division multiplexing (OFDM) symbols, discrete Fourier transform-spread-OFDM (DFT-s-OFDM) symbols, and the like.

Optionally, all SRS resources in all SRS resource sets may be transmitted on different symbols.

Optionally, SRS resources in the same SRS resource set may use different antenna ports.

Optionally, SRS resources in all SRS resource set may use different antenna ports. In this embodiment, based on the UE capability report, the transmit-receive port information (corresponding to different antenna combinations, 6R/8R) of the UE is obtained, and then the corresponding target configuration information is generated based on the transmit-receive port information. That is, SRS resources are allocated for different antenna combinations, respectively achieving SRS resource configuration for 1T6R, 2T6R, 4T6R, 1T8R, 2T8R, and 4T8R, to enlarge the transmit-receive channel matrix and effectively improve the flexibility of the scheduling of the base station. In addition, the base station configures appropriate resources for the UE, further improving the flexibility of resource configuration and the utilization rate of resources.

### Embodiment 2

The method for configuring an SRS resource of this embodiment is further improvement of embodiment 1. Specifically, refer to the following.

When the transmit-receive port information corresponds to M=1 and N=6 (i.e., 1T6R), the target configuration information includes three SRS resource sets, and each SRS resource set contains two SRS resources, the three SRS resource sets occupy three different slot units.

Alternatively, when the transmit-receive port information corresponds to M=1 and N=6 (i.e., 1T6R), the target configuration information includes two SRS resource sets, one SRS resource set contains two SRS resources, and the other SRS resource set contains four SRS resources, the two SRS resource sets occupy two different slot units.

Alternatively, when the transmit-receive port information corresponds to M=1 and N=6 (i.e., 1T6R), the target configuration information includes two SRS resource sets, one SRS resource set contains one SRS resource, and the other SRS resource set contains five SRS resources, the two SRS resource sets occupy two different slot units.

Alternatively, when the transmit-receive port information corresponds to M=1 and N=6 (i.e., 1T6R), the target configuration information includes one SRS resource set, and the SRS resource set contains six SRS resources, the SRS resource set occupies one slot unit.

For 1T6R, the SRS resource set is configured to be periodic, aperiodic, or semi-persistent.

Alternatively, when the transmit-receive port information corresponds to M=2 and N=6 (i.e., 2T6R), the target configuration information includes two SRS resource sets, one SRS resource set contains one SRS resource, and the other SRS resource set contains two SRS resources, the two SRS resource sets occupy two different slot units.

Alternatively, when the transmit-receive port information corresponds to M=2 and N=6 (i.e., 2T6R), the target configuration information includes one SRS resource set, and the SRS resource set contains three SRS resources, the SRS resource set occupies one slot unit.

For 2T6R, the SRS resource set is configured to be periodic, aperiodic, or semi-persistent.

Alternatively, when the transmit-receive port information corresponds to M=4 and N=6 (i.e., 4T6R), the target configuration information includes one SRS resource set, and the SRS resource set contains two SRS resources, the SRS resource set occupies one slot unit.

Alternatively, when the transmit-receive port information corresponds to M=4 and N=6 (i.e., 4T6R), the target configuration information includes two SRS resource sets, and each SRS resource set contains one SRS resource, the two SRS resource sets occupy one slot unit or two slot units.

For 4T6R, the SRS resource set is configured to be periodic, aperiodic, or semi-persistent.

Alternatively, when the transmit-receive port information corresponds to M=1 and N=8 (i.e., 1T8R), the target configuration information includes four SRS resource sets, and each SRS resource set contains two SRS resources, the four SRS resource sets occupy four different slot units.

Alternatively, when the transmit-receive port information corresponds to M=1 and N=8 (i.e., 1T8R), the target configuration information includes two SRS resource sets, and each SRS resource set contains four SRS resources, the two SRS resource sets occupy two different slot units.

Alternatively, when the transmit-receive port information corresponds to M=1 and N=8 (i.e., 1T8R), the target configuration information includes two SRS resource sets, one SRS resource set contains two SRS resources, and the other SRS resource set contains six SRS resources, the two SRS resource sets occupy two different slot units.

Alternatively, when the transmit-receive port information corresponds to M=1 and N=8 (i.e., 1T8R), the target configuration information includes two SRS resource sets, one SRS resource set contains three SRS resources, and the other SRS resource set contains five SRS resources, the two SRS resource sets occupy two different slot units.

For 1T8R, the SRS resource set is configured to be periodic, aperiodic, or semi-persistent.

Alternatively, when the transmit-receive port information corresponds to M=2 and N=8 (i.e., 2T8R), the target configuration information includes two SRS resource sets, one SRS resource set contains two SRS resources, and the other SRS resource set contains two SRS resources, the two SRS resource sets occupy two different slot units.

Alternatively, when the transmit-receive port information corresponds to M=2 and N=8 (i.e., 2T8R), the target configuration information includes two SRS resource sets, one SRS resource set contains one SRS resource, and the other SRS resource set contains three SRS resources, the two SRS resource sets occupy two different slot units.

Alternatively, when the transmit-receive port information corresponds to M=2 and N=8 (i.e., 2T8R), the target configuration information includes one SRS resource set, and the SRS resource set contains four SRS resources, the SRS resource set occupies one slot unit.

For 2T8R, the SRS resource set is configured to be periodic, aperiodic, or semi-persistent.

Alternatively, when the transmit-receive port information corresponds to M=4 and N=8 (i.e., 4T8R), the target configuration information includes two SRS resource sets, one SRS resource set contains two SRS resources, and the other SRS resource set contains two SRS resources, the two SRS resource sets occupy one slot unit or two slot units.

Alternatively, when the transmit-receive port information corresponds to M=4 and N=8 (i.e., 4T8R), the target configuration information includes one SRS resource set, and the SRS resource set contains two SRS resources, the SRS resource set occupies one slot unit.

For 4T8R, the SRS resource set is configured to be periodic, aperiodic, or semi-persistent. The following is described in conjunction with the specific scene.

For the UE, the corresponding UE capability report in case of each of the above antenna combinations includes at least one of the following.

For 1T6R, the corresponding UE capability report may be: 1T6R. For details, refer to the hardware structure shown in FIG. 2 ("A" represents a receive antenna port, "B" represents a power amplifier of the UE, similarly hereinafter).

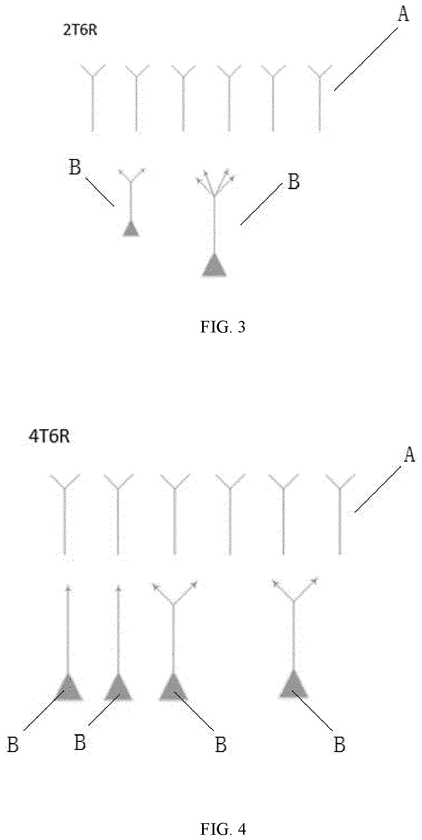

For 2T6R, the corresponding UE capability report may be: 1T2R-1T4R-1T6R, that is, the UE can support the three transmit-receive antenna port configurations at the same time. For details, refer to the hardware structure shown in FIG. 3.

For 4T6R, the corresponding UE capability report may be: 1T2R-4T6R, that is, the UE can support the two transmit-receive antenna port configurations at the same time. For details, refer to the hardware structure shown in FIG. 4.

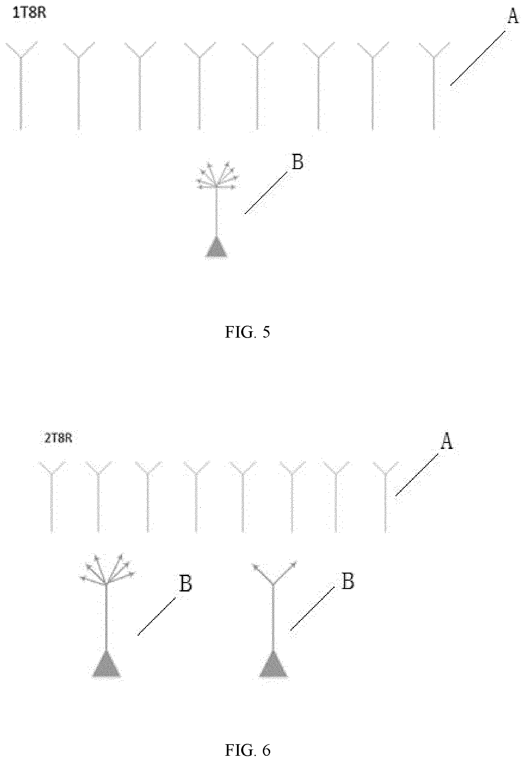

For 1T8R, the corresponding UE capability report may be: 1T8R. For details, refer to the hardware structure shown in FIG. 5.

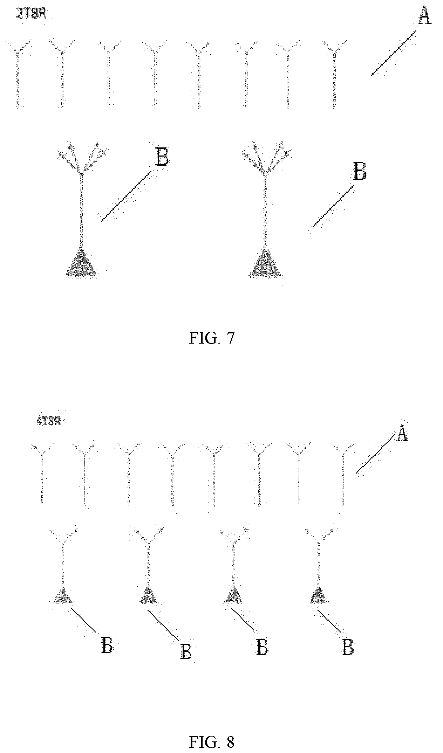

For 2T8R, the corresponding UE capability report may be: 1T2R-1T6R-2T8R, that is, the UE can support the three transmit-receive antenna port configurations at the same time. For details, refer to the hardware structure shown in FIG. 6. Alternatively, the corresponding UE capability report may be: 1T4R-2T8R, that is, the UE can support the two transmit-receive antenna port configurations at the same time. For details, refer to the hardware structure shown in FIG. 7.

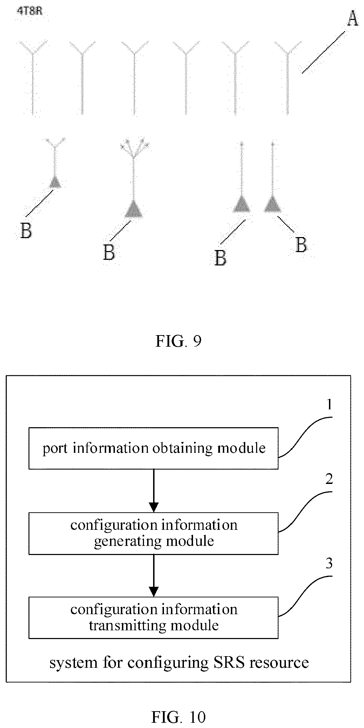

For 4T8R, the corresponding UE capability report may be: 1T2R-4T8R, that is, the UE can support the two transmit-receive antenna port configurations at the same time. For details, refer to the hardware structure shown in FIG. 8. Alternatively, the corresponding UE capability report may be: 1T2R-1T4R-4T8R, that is, the UE can support the three transmit-receive antenna port configurations at the same time. For details, refer to the hardware structure shown in FIG. 9.

In this embodiment, based on the UE capability report, the transmit-receive port information (corresponding to different antenna combinations, 6R/8R) of the UE is obtained, and then the corresponding target configuration information is generated based on the transmit-receive port information. That is, SRS resources are allocated for different antenna combinations, respectively achieving SRS resource configuration for 1T6R, 2T6R, 4T6R, 1T8R, 2T8R, and 4T8R, to enlarge the transmit-receive channel matrix and effectively improve the flexibility of the scheduling of the base station. In addition, the base station configures appropriate resources for the UE, further improving the flexibility of resource configuration and the utilization rate of resources.

### Embodiment 3

As illustrated in FIG. 10, a system for configuring an SRS resource of this embodiment includes a port information obtaining module 1, a configuration information generating module 2, and a configuration information transmitting module 3.

The port information obtaining module 1, the configuration information generating module 2, and the configuration information transmitting module 3 are all set in the base station.

The port information obtaining module 1 is configured to obtain transmit-receive port information of a UE based on a UE capability report.

The transmit-receive port information includes information of M transmit antenna ports and N receive antenna ports corresponding to the UE, and M=1, 2, or 4 and N=6 or 8.

In the case that N=6, transmit-receive port information (i.e., different antenna combinations) corresponding to antenna switching includes 1T6R, 2T6R, or 4T6R. In the case that N=8, antenna combinations corresponding to antenna switching include 1T8R, 2T8R, or 4T8R. "T" represents transmit antenna port and "R" represents receive antenna port.

Furthermore, N can take a value of n (n ≧ 9 and is an integer), and the corresponding SRS resource configuration can also be implemented based on the configuration method of the disclosure. The larger the value of n is, the higher the performance requirements of the UE are.

The configuration information generating module 2 is configured to generate corresponding target configuration information based on the transmit-receive port information.

Specifically, the configuration information generating module 2 is configured to configure the transmit-receive port information to correspond a first number of SRS resource sets and each SRS resource set to contain a second number of SRS resources. The first number of SRS resource sets occupy a third number of slot units.

It can be understood that, the first number of SRS resource sets occupying the third number of slot units can be predefined, rather than indicated explicitly through signaling.

The SRS resource set can be configured to be periodic, aperiodic, or semi-persistent.

Alternatively, each SRS resource in the SRS resource set can be configured to be periodic, aperiodic, or semi-persistent.

The configuration information transmitting module 3 is configured to transmit the target configuration information to the UE.

Furthermore, optionally, SRS resources in the same SRS resource set may be transmitted on different symbols. The symbols may be OFDM symbols, DFT-s-OFDM symbols, and the like.

Optionally, all SRS resources in all SRS resource sets may be transmitted on different symbols.

Optionally, SRS resources in the same SRS resource set may use different antenna ports.

Optionally, SRS resources in all SRS resource set may use different antenna ports.

In this embodiment, based on the UE capability report, the transmit-receive port information (corresponding to different antenna combinations, 6R/8R) of the UE is obtained, and then the corresponding target configuration information is generated based on the transmit-receive port information. That is, SRS resources are allocated for different antenna combinations, respectively achieving SRS resource configuration for 1T6R, 2T6R, 4T6R, 1T8R, 2T8R, and 4T8R, to enlarge the transmit-receive channel matrix and effectively improve the flexibility of the scheduling of the base station. In addition, the base station configures appropriate resources for the UE, further improving the flexibility of resource configuration and the utilization rate of resources.

### Embodiment 4

The system for configuring an SRS resource of this embodiment is further improvement of embodiment 3. Specifically, refer to the following.

When the transmit-receive port information corresponds to M=1 and N=6 (i.e., 1T6R), the target configuration information includes three SRS resource sets, and each SRS resource set contains two SRS resources, the three SRS resource sets occupy three different slot units.

Alternatively, when the transmit-receive port information corresponds to M=1 and N=6 (i.e., 1T6R), the target configuration information includes two SRS resource sets, one SRS resource set contains two SRS resources, and the other SRS resource set contains four SRS resources, the two SRS resource sets occupy two different slot units.

Alternatively, when the transmit-receive port information corresponds to M=1 and N=6 (i.e., 1T6R), the target configuration information includes two SRS resource sets, one SRS resource set contains one SRS resource, and the other SRS resource set contains five SRS resources, the two SRS resource sets occupy two different slot units.

Alternatively, when the transmit-receive port information corresponds to M=1 and N=6 (i.e., 1T6R), the target configuration information includes one SRS resource set, and the SRS resource set contains six SRS resources, the SRS resource set occupies one slot unit.

For 1T6R, the SRS resource set is configured to be periodic, aperiodic, or semi-persistent.

Alternatively, when the transmit-receive port information corresponds to M=2 and N=6 (i.e., 2T6R), the target configuration information includes two SRS resource sets, one SRS resource set contains one SRS resource, and the other SRS resource set contains two SRS resources, the two SRS resource sets occupy two different slot units.

Alternatively, when the transmit-receive port information corresponds to M=2 and N=6 (i.e., 2T6R), the target configuration information includes one SRS resource set, and the SRS resource set contains three SRS resources, the SRS resource set occupies one slot unit.

For 2T6R, the SRS resource set is configured to be periodic, aperiodic, or semi-persistent.

Alternatively, when the transmit-receive port information corresponds to M=4 and N=6 (i.e., 4T6R), the target configuration information includes one SRS resource set, and the SRS resource set contains two SRS resources, the SRS resource set occupies one slot unit.

Alternatively, when the transmit-receive port information corresponds to M=4 and N=6 (i.e., 4T6R), the target configuration information includes two SRS resource sets, and each SRS resource set contains one SRS resource, the two SRS resource sets occupy one slot unit or two slot units.

For 4T6R, the SRS resource set is configured to be periodic, aperiodic, or semi-persistent.

Alternatively, when the transmit-receive port information corresponds to M=1 and N=8 (i.e., 1T8R), the target configuration information includes four SRS resource sets, and each SRS resource set contains two SRS resources, the four SRS resource sets occupy four different slot units.

Alternatively, when the transmit-receive port information corresponds to M=1 and N=8 (i.e., 1T8R), the target configuration information includes two SRS resource sets, and each SRS resource set contains four SRS resources, the two SRS resource sets occupy two different slot units.

Alternatively, when the transmit-receive port information corresponds to M=1 and N=8 (i.e., 1T8R), the target configuration information includes two SRS resource sets, one SRS resource set contains two SRS resources, and the other SRS resource set contains six SRS resources, the two SRS resource sets occupy two different slot units.

Alternatively, when the transmit-receive port information corresponds to M=1 and N=8 (i.e., 1T8R), the target configuration information includes two SRS resource sets, one SRS resource set contains three SRS resources, and the other SRS resource set contains five SRS resources, the two SRS resource sets occupy two different slot units.

For 1T8R, the SRS resource set is configured to be periodic, aperiodic, or semi-persistent.

Alternatively, when the transmit-receive port information corresponds to M=2 and N=8 (i.e., 2T8R), the target configuration information includes two SRS resource sets, one SRS resource set contains two SRS resources, and the other SRS resource set contains two SRS resources, the two SRS resource sets occupy two different slot units.

Alternatively, when the transmit-receive port information corresponds to M=2 and N=8 (i.e., 2T8R), the target configuration information includes two SRS resource sets, one SRS resource set contains one SRS resource, and the other SRS resource set contains three SRS resources, the two SRS resource sets occupy two different slot units.

Alternatively, when the transmit-receive port information corresponds to M=2 and N=8 (i.e., 2T8R), the target configuration information includes one SRS resource set, and the SRS resource set contains four SRS resources, the SRS resource set occupies one slot unit.

For 2T8R, the SRS resource set is configured to be periodic, aperiodic, or semi-persistent.

Alternatively, when the transmit-receive port information corresponds to M=4 and N=8 (i.e., 4T8R), the target configuration information includes two SRS resource sets, one SRS resource set contains two SRS resources, and the other SRS resource set contains two SRS resources, the two SRS resource sets occupy one slot unit or two slot units.

Alternatively, when the transmit-receive port information corresponds to M=4 and N=8 (i.e., 4T8R), the target configuration information includes one SRS resource set, and the SRS resource set contains two SRS resources, the SRS resource set occupies one slot unit.

For 4T8R, the SRS resource set is configured to be periodic, aperiodic, or semi-persistent.

The following is described in conjunction with the specific scene.

For the UE, the corresponding UE capability report in case of each of the above antenna combinations includes at least one of the following.

For 1T6R, the corresponding UE capability report may be: 1T6R. For details, refer to the hardware structure shown in FIG. 2 ("A" represents a receive antenna port, "B" represents a power amplifier of the UE, similarly hereinafter).

For 2T6R, the corresponding UE capability report may be: 1T2R-1T4R-1T6R, that is, the UE can support the three transmit-receive antenna port configurations at the same time. For details, refer to the hardware structure shown in FIG. 3.

For 4T6R, the corresponding UE capability report may be: 1T2R-4T6R, that is, the UE can support the two transmit-receive antenna port configurations at the same time. For details, refer to the hardware structure shown in FIG. 4.

For 1T8R, the corresponding UE capability report may be: 1T8R. For details, refer to the hardware structure shown in FIG. 5.

For 2T8R, the corresponding UE capability report may be: 1T2R-1T6R-2T8R, that is, the UE can support the three transmit-receive antenna port configurations at the same time. For details, refer to the hardware structure shown in FIG. 6. Alternatively, the corresponding UE capability report may be: 1T4R-2T8R, that is, the UE can support the two transmit-receive antenna port configurations at the same time. For details, refer to the hardware structure shown in FIG. 7.

For 4T8R, the corresponding UE capability report may be: 1T2R-4T8R, that is, the UE can support the two transmit-receive antenna port configurations at the same time. For details, refer to the hardware structure shown in FIG. 8. Alternatively, the corresponding UE capability report may be: 1T2R-1T4R-4T8R, that is, the UE can support the three transmit-receive antenna port configurations at the same time. For details, refer to the hardware structure shown in FIG. 9.

In this embodiment, based on the UE capability report, the transmit-receive port information (corresponding to different antenna combinations, 6R/8R) of the UE is obtained, and then the corresponding target configuration information is generated based on the transmit-receive port information. That is, SRS resources are allocated for different antenna combinations, respectively achieving SRS resource configuration for 1T6R, 2T6R, 4T6R, 1T8R, 2T8R, and 4T8R, to enlarge the transmit-receive channel matrix and effectively improve the flexibility of the scheduling of the base station. In addition, the base station configures appropriate resources for the UE, further improving the flexibility of resource configuration and the utilization rate of resources.

### Embodiment 5

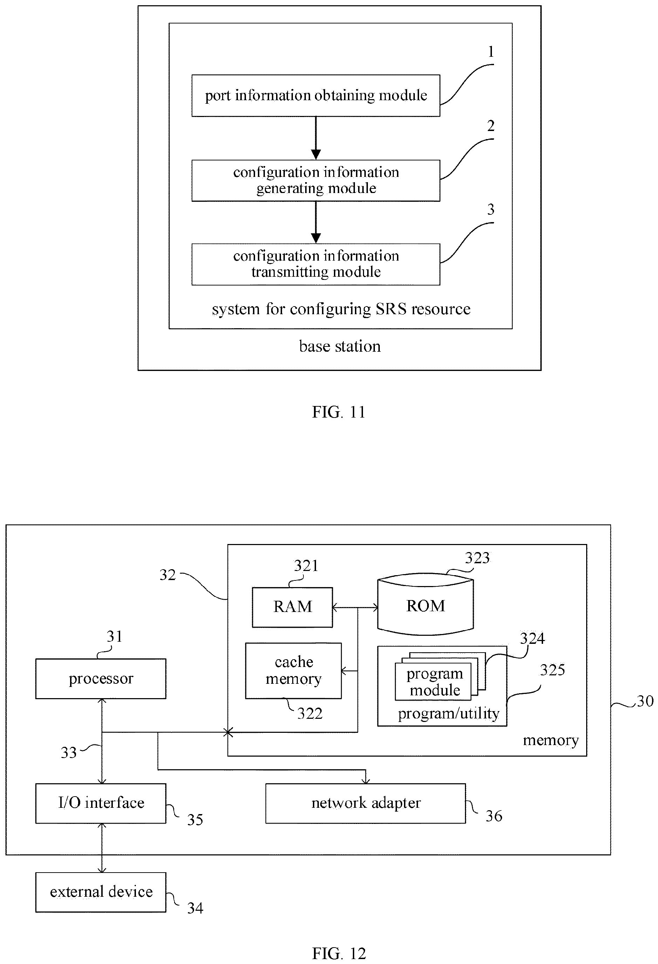

As illustrated in FIG. 11, the base station of this embodiment includes the system for configuring an SRS resource of embodiment 3 or embodiment 4.

The base station of this embodiment obtains the transmit-receive port information of the UE based on the UE capability report, and then generates the corresponding target configuration information based on the transmit-receive port information. That is, SRS resources are allocated for different antenna combinations, respectively achieving SRS resource configuration for 1T6R, 2T6R, 4T6R, 1T8R, 2T8R, and 4T8R, to increase the transmit-receive channel matrix and effectively improve the flexibility of the scheduling.

### Embodiment 6

FIG. 12 is a schematic structural diagram of an electronic device that implements a method for configuring an SRS resource of embodiment 6 of the disclosure. The electronic device includes a memory, a processor, and a computer program stored in the memory and executable on the processor. When executing the computer program, the processor implements the method for configuring an SRS resource of embodiment 1 or embodiment 2. The electronic device 30 illustrated in FIG. 12 is merely an example, and should not impose any limitation on the function and use scope of the embodiments of the disclosure.

As shown in FIG. 12, the electronic device 30 may in the form of a general-purpose computing device, for example, it may be a server device. Components of the electronic device 30 may include, but are not limited to, the above at least one processor 31, the above at least one memory 32, and a bus 33 connecting different system components (including the memory 32 and the processor 31).

The bus 33 includes a data bus, an address bus, and a control bus.

The memory 32 may include volatile memory, such as random access memory (RAM) 321 and/or cache memory 322, and may further include read only memory (ROM) 323.

The memory 32 may also include a program/utility 325 having a set (at least one) of program modules 324. The program modules 324 include, but not limited to, an operating system, one or more application programs, other program modules, and program data. Each or some combination of the examples may include implementation of a network environment.

The processor 31 executes various functional applications and data processing by running the computer program stored in the memory 32, such as the method for configuring an SRS resource of embodiment 1 or embodiment 2 of the disclosure.

The electronic device 30 may also communicate with one or more external devices 34 (e.g., keyboards, pointing devices, etc.). Such communication may be carried out through input/output (I/O) interface 35. Further, the model generating device 30 may also communicate with one or more networks (e.g., a local area network (LAN), a wide area network (WAN), and/or a public network, such as the Internet) through a network adapter 36. As shown in FIG. 12, the network adapter 36 communicates with other modules of the model generating device 30 via the bus 33. It should be understood that, although not shown, in conjunction with the model- generating device 30, other hardware and/or software modules may be used, including but not limited to: microcode, device drivers, redundant processors, external disk drive arrays, redundant array of independent disks (RAID) systems, tape drives, and data backup storage systems.

It should be noted that, although several units/modules or sub-units/modules of the electronic device are mentioned in the above detailed description, this division is merely exemplary and not mandatory. Indeed, the features and functions of two or more units/modules described above may be embodied in one unit/module, based on implementations of the disclosure. Conversely, the features and functions of one unit/module described above may be further divided to be embodied in multiple units/modules.

### Embodiment 7

This embodiment provides a computer-readable storage medium. The computer-readable storage medium stores a computer program thereon. When executed by a processor, the computer program implements operations of the method for configuring an SRS resource of embodiment 1 or embodiment 2.

More specifically, the readable storage medium may include, but is not limited to, portable disk, hard disk, random access memory, read only memory, erasable programmable read only memory, optical storage device, magnetic storage device, or any suitable combination of the above.

In possible implementations, the disclosure may also be implemented in the form of a program product. The program product includes a program code. When the program product runs on a terminal device, the program code is used to cause the terminal device to execute operations of the method for configuring an SRS resource of embodiment 1 or embodiment 2.

The program code for carrying out the disclosure may be written in any combination of one or more programming languages. The program code may be executed entirely on the user equipment, partly on the user equipment, as a stand-alone software package, partly on the user equipment and partly on a remote device, or entirely on the remote device.

Although the specific implementations of the disclosure are described above, those skilled in the art should understand that these are merely for illustration, and the protection scope of the disclosure is defined by the appended claims. Those skilled in the art can make various changes or modifications to these implementations without departing from the principle and essence of the disclosure, but these changes and modifications all fall within the protection scope of the disclosure.

## Claims

1. A method for configuring a sounding reference signal (SRS) resource, applicable to a base station and comprising:
obtaining transmit-receive port information of a user equipment (UE) based on a UE capability report, wherein the transmit-receive port information comprises information of M transmit antenna ports and N receive antenna ports corresponding to the UE, and M=1, 2, or 4 and N=6 or 8;
generating corresponding target configuration information based on the transmit-receive port information, wherein the target configuration information comprises a number of SRS resource sets and each SRS resource set contains a number of SRS resources; and
transmitting the target configuration information to the UE for configuration.

2. The method of claim 1, wherein generating the corresponding target configuration information based on the transmit-receive port information comprises:
configuring the transmit-receive port information to correspond a first number of SRS resource sets and each SRS resource set to contain a second number of SRS resources.

3. The method of claim 2, wherein
in response to the transmit-receive port information corresponding to M=1 and N=6, the target configuration information comprises three SRS resource sets and each SRS resource set contains two SRS resources;
in response to the transmit-receive port information corresponding to M=1 and N=6, the target configuration information comprises two SRS resource sets, one SRS resource set contains two SRS resources, and the other SRS resource set contains four SRS resources;
in response to the transmit-receive port information corresponding to M=1 and N=6, the target configuration information comprises two SRS resource sets, one SRS resource set contains one SRS resource, and the other SRS resource set contains five SRS resources;
in response to the transmit-receive port information corresponding to M=1 and N=6, the target configuration information comprises one SRS resource set and the SRS resource set contains six SRS resources;
in response to the transmit-receive port information corresponding to M=2 and N=6, the target configuration information comprises two SRS resource sets, one SRS resource set contains one SRS resource, and the other SRS resource set contains two SRS resources;
in response to the transmit-receive port information corresponding to M=2 and N=6, the target configuration information comprises one SRS resource set and the SRS resource set contains three SRS resources;
in response to the transmit-receive port information corresponding to M=4 and N=6, the target configuration information comprises one SRS resource set and the SRS resource set contains two SRS resources; or
in response to the transmit-receive port information corresponding to M=4 and N=6, the target configuration information comprises two SRS resource sets and each SRS resource set contains one SRS resource.

4. The method of claim 3, wherein
in response to the transmit-receive port information corresponding to M=1 and N=8, the target configuration information comprises four SRS resource sets and each SRS resource set contains two SRS resources;
in response to the transmit-receive port information corresponding to M=1 and N=8, the target configuration information comprises two SRS resource sets and each SRS resource set contains four SRS resources;
in response to the transmit-receive port information corresponding to M=1 and N=8, the target configuration information comprises two SRS resource sets, one SRS resource set contains two SRS resources, and the other SRS resource set contains six SRS resources;
in response to the transmit-receive port information corresponding to M=1 and N=8, the target configuration information comprises two SRS resource sets, one SRS resource set contains three SRS resources, and the other SRS resource set contains five SRS resources;
in response to the transmit-receive port information corresponding to M=2 and N=8, the target configuration information comprises two SRS resource sets, one SRS resource set contains two SRS resources, and the other SRS resource set contains two SRS resources;
in response to the transmit-receive port information corresponding to M=2 and N=8, the target configuration information comprises two SRS resource sets, one SRS resource set contains one SRS resource, and the other SRS resource set contains three SRS resources;
in response to the transmit-receive port information corresponding to M=2 and N=8, the target configuration information comprises one SRS resource set, and the SRS resource set contains four SRS resources;
in response to the transmit-receive port information corresponding to M=4 and N=8, the target configuration information comprises two SRS resource sets, one SRS resource set contains two SRS resources, and the other SRS resource set contains two SRS resources; or
in response to the transmit-receive port information corresponding to M=4 and N=8, the target configuration information comprises one SRS resource set, and the SRS resource set contains two SRS resources.

5. The method of claim 4, further comprising:
configuring the first number of SRS resource sets to occupy a third number of slot units when the target configuration information comprises the first number of SRS resource sets.

6. The method of claim 5, wherein
in response to the transmit-receive port information corresponding to M=1 and N=6, the target configuration information comprises three SRS resource sets, and each SRS resource set contains two SRS resources, the three SRS resource sets occupy three different slot units;
in response to the transmit-receive port information corresponding to M=1 and N=6, the target configuration information comprises two SRS resource sets, one SRS resource set contains two SRS resources, and the other SRS resource set contains four SRS resources, the two SRS resource sets occupy two different slot units;
in response to the transmit-receive port information corresponding to M=1 and N=6, the target configuration information comprises two SRS resource sets, one SRS resource set contains one SRS resource, and the other SRS resource set contains five SRS resources, the two SRS resource sets occupy two different slot units;
in response to the transmit-receive port information corresponding to M=1 and N=6, the target configuration information comprises one SRS resource set, and the SRS resource set contains six SRS resources, the SRS resource set occupies one slot unit;
in response to the transmit-receive port information corresponding to M=2 and N=6, the target configuration information comprises two SRS resource sets, one SRS resource set contains one SRS resource, and the other SRS resource set contains two SRS resources, the two SRS resource sets occupy two different slot units;
in response to the transmit-receive port information corresponding to M=2 and N=6, the target configuration information comprises one SRS resource set, and the SRS resource set contains three SRS resources, the SRS resource set occupies one slot unit;
in response to the transmit-receive port information corresponding to M=4 and N=6, the target configuration information comprises one SRS resource set, and the SRS resource set contains two SRS resources, the SRS resource set occupies one slot unit; or
in response to the transmit-receive port information corresponding to M=4 and N=6, the target configuration information comprises two SRS resource sets, and each SRS resource set contains one SRS resource, the two SRS resource sets occupy one slot unit or two slot units.

7. The method of claim 5 or 6, wherein
in response to the transmit-receive port information corresponding to M=1 and N=8, the target configuration information comprises four SRS resource sets, and each SRS resource set contains two SRS resources, the four SRS resource sets occupy four different slot units;
in response to the transmit-receive port information corresponding to M=1 and N=8, the target configuration information comprises two SRS resource sets, and each SRS resource set contains four SRS resources, the two SRS resource sets occupy two different slot units;
in response to the transmit-receive port information corresponding to M=1 and N=8, the target configuration information comprises two SRS resource sets, one SRS resource set contains two SRS resources, and the other SRS resource set contains six SRS resources, the two SRS resource sets occupy two different slot units;
in response to the transmit-receive port information corresponding to M=1 and N=8, the target configuration information comprises two SRS resource sets, one SRS resource set contains three SRS resources, and the other SRS resource set contains five SRS resources, the two SRS resource sets occupy two different slot units;
in response to the transmit-receive port information corresponding to M=2 and N=8, the target configuration information comprises two SRS resource sets, one SRS resource set contains two SRS resources, and the other SRS resource set contains two SRS resources, the two SRS resource sets occupy two different slot units;
in response to the transmit-receive port information corresponding to M=2 and N=8, the target configuration information comprises two SRS resource sets, one SRS resource set contains one SRS resource, and the other SRS resource set contains three SRS resources, the two SRS resource sets occupy two different slot units;
in response to the transmit-receive port information corresponding to M=2 and N=8, the target configuration information comprises one SRS resource set, and the SRS resource set contains four SRS resources, the SRS resource set occupies one slot unit;
in response to the transmit-receive port information corresponding to M=4 and N=8, the target configuration information comprises two SRS resource sets, one SRS resource set contains two SRS resources, and the other SRS resource set contains two SRS resources, the two SRS resource sets occupy one slot unit or two slot units; or
in response to the transmit-receive port information corresponding to M=4 and N=8, the target configuration information comprises one SRS resource set, and the SRS resource set contains two SRS resources, the SRS resource set occupies one slot unit.

8. The method of any of claims 1-7, further comprising:
configuring each SRS resource set to be periodic, aperiodic, or semi-persistent; or
configuring each SRS resource in each SRS resource set to be periodic, aperiodic, or semi-persistent.

9. A system for configuring a sounding reference signal (SRS) resource, comprising: a port information obtaining module, a configuration information generating module, and a configuration information transmitting module which are all set in a base station, wherein
the port information obtaining module is configured to obtain transmit-receive port information of a user equipment (UE) based on a UE capability report, wherein the transmit-receive port information comprises information of M transmit antenna ports and N receive antenna ports corresponding to the UE, and M=1, 2, or 4 and N=6 or 8;
the configuration information generating module is configured to generate corresponding target configuration information based on the transmit-receive port information, wherein the target configuration information comprises a number of SRS resource sets and a number of SRS resources contained in each SRS resource set; and
the configuration information transmitting module is configured to transmit the target configuration information to the UE.

10. The system of claim 9, wherein the configuration information generating module is configured to configure the transmit-receive port information to correspond a first number of SRS resource sets and each SRS resource set to contain a second number of SRS resources.

11. The system of claim 10, wherein
in response to the transmit-receive port information corresponding to M=1 and N=6, the target configuration information comprises three SRS resource sets and each SRS resource set contains two SRS resources;
in response to the transmit-receive port information corresponding to M=1 and N=6, the target configuration information comprises two SRS resource sets, one SRS resource set contains two SRS resources, and the other SRS resource set contains four SRS resources;
in response to the transmit-receive port information corresponding to M=1 and N=6, the target configuration information comprises two SRS resource sets, one SRS resource set contains one SRS resource, and the other SRS resource set contains five SRS resources;
in response to the transmit-receive port information corresponding to M=1 and N=6, the target configuration information comprises one SRS resource set and the SRS resource set contains six SRS resources;
in response to the transmit-receive port information corresponding to M=2 and N=6, the target configuration information comprises two SRS resource sets, one SRS resource set contains one SRS resource, and the other SRS resource set contains two SRS resources;
in response to the transmit-receive port information corresponding to M=2 and N=6, the target configuration information comprises one SRS resource set and the SRS resource set contains three SRS resources;
in response to the transmit-receive port information corresponding to M=4 and N=6, the target configuration information comprises one SRS resource set and the SRS resource set contains two SRS resources; or
in response to the transmit-receive port information corresponding to M=4 and N=6, the target configuration information comprises two SRS resource sets and each SRS resource set contains one SRS resource.

12. The system of claim 11, wherein
in response to the transmit-receive port information corresponding to M=1 and N=8, the target configuration information comprises four SRS resource sets and each SRS resource set contains two SRS resources;
in response to the transmit-receive port information corresponding to M=1 and N=8, the target configuration information comprises two SRS resource sets and each SRS resource set contains four SRS resources;
in response to the transmit-receive port information corresponding to M=1 and N=8, the target configuration information comprises two SRS resource sets, one SRS resource set contains two SRS resources, and the other SRS resource set contains six SRS resources;
in response to the transmit-receive port information corresponding to M=1 and N=8, the target configuration information comprises two SRS resource sets, one SRS resource set contains three SRS resources, and the other SRS resource set contains five SRS resources;
in response to the transmit-receive port information corresponding to M=2 and N=8, the target configuration information comprises two SRS resource sets, one SRS resource set contains two SRS resources, and the other SRS resource set contains two SRS resources;
in response to the transmit-receive port information corresponding to M=2 and N=8, the target configuration information comprises two SRS resource sets, one SRS resource set contains one SRS resource, and the other SRS resource set contains three SRS resources;
in response to the transmit-receive port information corresponding to M=2 and N=8, the target configuration information comprises one SRS resource set, and the SRS resource set contains four SRS resources;
in response to the transmit-receive port information corresponding to M=4 and N=8, the target configuration information comprises two SRS resource sets, one SRS resource set contains two SRS resources, and the other SRS resource set contains two SRS resources; or
in response to the transmit-receive port information corresponding to M=4 and N=8, the target configuration information comprises one SRS resource set, and the SRS resource set contains two SRS resources.

13. The system of claim 12, wherein the first number of SRS resource sets occupies a third number of slot units when the target configuration information comprises the first number of SRS resource sets.

14. The system of 13, wherein
in response to the transmit-receive port information corresponding to M=1 and N=6, the target configuration information comprises three SRS resource sets, and each SRS resource set contains two SRS resources, the three SRS resource sets occupy three different slot units;
in response to the transmit-receive port information corresponding to M=1 and N=6, the target configuration information comprises two SRS resource sets, one SRS resource set contains two SRS resources, and the other SRS resource set contains four SRS resources, the two SRS resource sets occupy two different slot units;
in response to the transmit-receive port information corresponding to M=1 and N=6, the target configuration information comprises two SRS resource sets, one SRS resource set contains one SRS resource, and the other SRS resource set contains five SRS resources, the two SRS resource sets occupy two different slot units;
in response to the transmit-receive port information corresponding to M=1 and N=6, the target configuration information comprises one SRS resource set, and the SRS resource set contains six SRS resources, the SRS resource set occupies one slot unit;
in response to the transmit-receive port information corresponding to M=2 and N=6, the target configuration information comprises two SRS resource sets, one SRS resource set contains one SRS resource, and the other SRS resource set contains two SRS resources, the two SRS resource sets occupy two different slot units;
in response to the transmit-receive port information corresponding to M=2 and N=6, the target configuration information comprises one SRS resource set, and the SRS resource set contains three SRS resources, the SRS resource set occupies one slot unit;
in response to the transmit-receive port information corresponding to M=4 and N=6, the target configuration information comprises one SRS resource set, and the SRS resource set contains two SRS resources, the SRS resource set occupies one slot unit; or
in response to the transmit-receive port information corresponding to M=4 and N=6, the target configuration information comprises two SRS resource sets, and each SRS resource set contains one SRS resource, the two SRS resource sets occupy one slot unit or two slot units.

15. The system of claim 13 or 14, wherein
in response to the transmit-receive port information corresponding to M=1 and N=8, the target configuration information comprises four SRS resource sets, and each SRS resource set contains two SRS resources, the four SRS resource sets occupy four different slot units;
in response to the transmit-receive port information corresponding to M=1 and N=8, the target configuration information comprises two SRS resource sets, and each SRS resource set contains four SRS resources, the two SRS resource sets occupy two different slot units;
in response to the transmit-receive port information corresponding to M=1 and N=8, the target configuration information comprises two SRS resource sets, one SRS resource set contains two SRS resources, and the other SRS resource set contains six SRS resources, the two SRS resource sets occupy two different slot units;
in response to the transmit-receive port information corresponding to M=1 and N=8, the target configuration information comprises two SRS resource sets, one SRS resource set contains three SRS resources, and the other SRS resource set contains five SRS resources, the two SRS resource sets occupy two different slot units;
in response to the transmit-receive port information corresponding to M=2 and N=8, the target configuration information comprises two SRS resource sets, one SRS resource set contains two SRS resources, and the other SRS resource set contains two SRS resources, the two SRS resource sets occupy two different slot units;
in response to the transmit-receive port information corresponding to M=2 and N=8, the target configuration information comprises two SRS resource sets, one SRS resource set contains one SRS resource, and the other SRS resource set contains three SRS resources, the two SRS resource sets occupy two different slot units;
in response to the transmit-receive port information corresponding to M=2 and N=8, the target configuration information comprises one SRS resource set, and the SRS resource set contains four SRS resources, the SRS resource set occupies one slot unit;
in response to the transmit-receive port information corresponding to M=4 and N=8, the target configuration information comprises two SRS resource sets, one SRS resource set contains two SRS resources, and the other SRS resource set contains two SRS resources, the two SRS resource sets occupy one slot unit or two slot units; or
in response to the transmit-receive port information corresponding to M=4 and N=8, the target configuration information comprises one SRS resource set, and the SRS resource set contains two SRS resources, the SRS resource set occupies one slot unit.

16. The system of any of claims 9-15, wherein the configuration information generating module is configured to:
configure each SRS resource set to be periodic, aperiodic, or semi-persistent; or
configure each SRS resource in each SRS resource set to be periodic, aperiodic, or semi-persistent.

17. An electronic device, comprising a memory, a processor, and a computer program stored in the memory and executable on the processor, wherein when executing the computer program, the processor implements the method for configuring a sounding reference signal (SRS) resource of any of claims 1-8.

18. A computer-readable storage medium storing a computer program thereon, wherein when executed by a processor, the computer program implements operations of the method for configuring a sounding reference signal (SRS) resource of any of claims 1-8.

19. Abase station comprising the system for configuring a sounding reference signal (SRS) resource of any of claims 9-16.
